Europäisches Patentamt

European Patent Office

Office européen des brevets

(19)

(11) Publication number: **0 061 928**
**B1**

(12) **EUROPEAN PATENT SPECIFICATION**

(45) Date of publication of patent specification: 26.02.86

(51) Int. Cl.⁴: **B 60 R 5/04, B 62 D 31/00**

(21) Application number: 82301666.2

(22) Date of filing: 30.03.82

(54) Vehicle rear shelf arrangement.

(30) Priority: 31.03.81 GB 8110094

(43) Date of publication of application:
06.10.82 Bulletin 82/40

(45) Publication of the grant of the patent:
26.02.86 Bulletin 86/09

(84) Designated Contracting States:
DE FR IT

(56) References cited:
GB-A-1 456 747
GB-A-1 459 056
GB-A-2 040 833

(73) Proprietor: TALBOT MOTOR COMPANY
LIMITED
Administrative Centre P.O. Box 122A Abbey
Road
Whitley, Coventry, CV34GB (GB)

(72) Inventor: Arnold, Eric William
233 Yewdale Crescent
Coventry, CV2 2FS (GB)

(74) Representative: Bayliss, Geoffrey Cyril et al
BOULT, WADE & TENNANT 27 Furnival Street
London EC4A 1PQ (GB)

Courier Press, Leamington Spa, England.

## Description

This invention relates to vehicles of the type having a rear door hinged at the top thereof to the vehicle body and a seat in front of the rear door, wherein a shelf between the seat and the door is hinged adjacent the front of the shelf and is connected by a tether to the door so that the shelf is hinged upwardly in response to opening of the door.

In a known arrangement in which the door pivots from a closed, downwardly inclined position to an open, upwardly inclined position and the shelf hinge is disposed below the door hinge, a tether is connected at one end to the shelf and at the other end to the door. With such an arrangement, the amount by which the shelf can be pivoted upwardly when the door is opened is limited by the tether becoming aligned with the shelf, and as the tether approaches alignment with the shelf, the tension in the tether increases.

In accordance with the present invention, there is provided a vehicle having a rear door hinged at the top thereof to the vehicle body, a seat in front of the rear door, a shelf between the seat and the door hinged along or adjacent the front of the shelf and a tether extending between the shelf and the door to pivot the shelf upwardly in response to opening of the rear door characterised in that at least one guide is mounted on the door above the shelf and the tether extending from the shelf behind the shelf hinge and around the guide and being anchored to a part of the vehicle not being the door and located below the door hinge.

The guide in the present invention can be located nearer the door hinge than the point of attachment of the tether to the door in the known arrangement described above, to obtain the same amount of lift of the shelf as in the known arrangement, and consequently the tension in the tether when the door is open is less than in the known arrangement. Alternatively, the guide can be arranged to provide more lift of the shelf than in the known arrangement described above without increasing the maximum tension in the tether.

A specific embodiment of the invention and modifications thereof will now be described by way of example reference being made to the accompanying drawings, in which:

Figure 1 is a diagrammatic sectional view in side elevation showing the rear portion of the vehicle according to one embodiment of the invention;

Figure 2 is a diagrammatic perspective view of part of the embodiment shown in Figure 1; and

Figure 3 is a perspective cut-away and part "exploded" view of part of the embodiment shown in Figure 1.

Referring to the drawings, a motor vehicle has an upwardly pivotable rear door 10 incorporating a backlight 11 which extends substantially the width and length of the door. The door is provided with conventional gas struts or torsion springs (not shown) to hold the door open. In the closed position of the door, a parcel tray/luggage cover comprising a shelf 12 extends horizontally between the rear of the forwardly tiltable rear seat backrest 13 towards the door and above the level of the lower edge of the backlight 11.

The front edge of the shelf is pivotably connected at 14 to spaced apart brackets 15 secured to the rear of the rear seat backrest 13 whilst the side edges of the shelf rest upon support elements (not shown) formed by interior trim panels or on part of the vehicle body side structure.

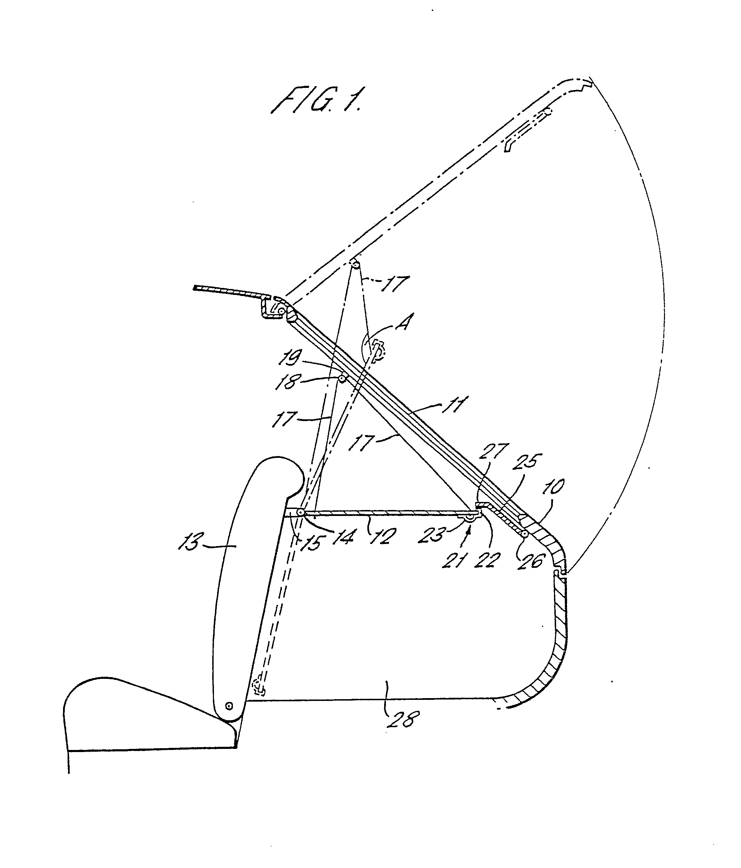

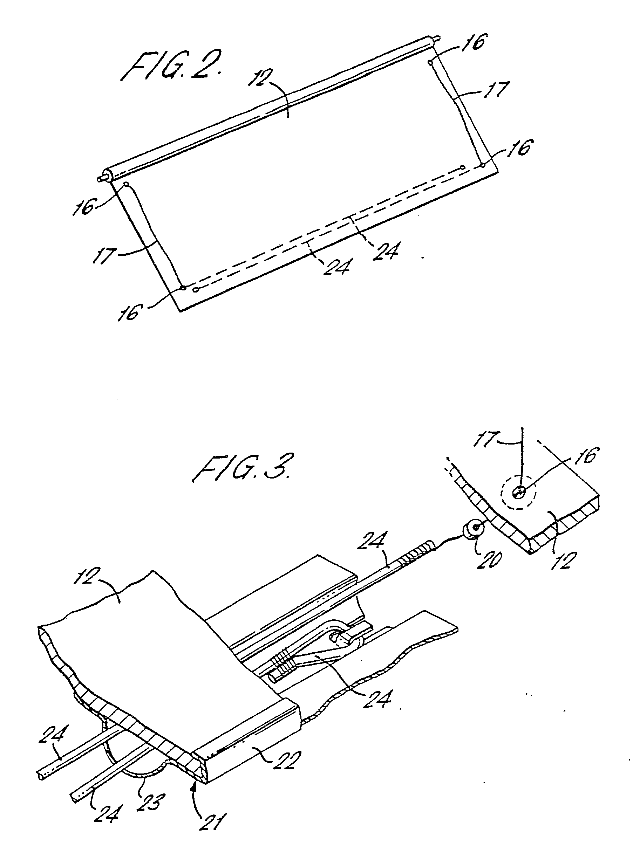

Holes 16 are formed in the shelf 12 adjacent the rear corners thereof. A respective flexible cord 17 passes through each hole 16 on the respective side of the shelf as shown in Figure 2 to form an upwardly extending loop on each side thereof which passes over a flanged pulley 18 rotatably mounted on a bracket 19 secured to the underside of the side frame of the door 10 as shown in Figure 1. A stop member 20, which can alternatively be a suitable knot, is provided on that end of each flexible cord 17, below the shelf 12 to the underside of the shelf to prevent the cords from being pulled upwardly through the holes 16.

A reinforcing element 21 is secured to the shelf 12 along the rear edge thereof and comprises a U-section portion 22 which engages around the rear edge of the shelf and an arcuate section portion 23 extending along the marginal underside rear edge of the shelf to form a conduit therewith and with which the holes 16 in the rear corners of the shelf 12 are in communication. For a purpose to be described later, the end of each flexible cord 17 below the shelf 12 extends beyond the stop member 20 and is connected to one end of a respective suitably-tensioned elastic cord 24. The elastic cords 24 extend along said conduit in side-by-side relationship and are secured at their opposite ends to the wall of the arcuate-section portion 23 of the reinforcing element 21 as shown for example in Figure 3.

A relatively narrow panel 25 extending the width of the shelf 12 and underlaying the marginal lower edge of the backlight 11 is pivotably attached at its lower rear edge 26 to the underside of the frame of the rear door 10 and extends upwardly parallel to it. The upper forward marginal edge 27 of the panel 25 is formed at an angle thereto such that in the closed position of the rear door it extends horizontally forwardly to slightly overlay the rear edge of shelf 12, thus obturating the space between the rear of shelf 12 and the underside of the door 10. The panel 25 is normally held in the parallel position against the door 10 by suitable resilient snap-connection means (not shown) at each end of the panel, but may be released therefrom for pivotable movement away from the door for the purpose of cleaning the area of backlight which it underlays.

Referring to Figure 1, when the rear door 10 is pivoted upwardly from the closed position shown in full line to the open position shown in chain-dotted line the panel 25 moves with the door away from shelf 12. Simultaneously, shelf 12 pivots upwardly about point 14 by movement of the pulleys 18 along the respective loops of cords 17 to the position also shown in chain-dotted line, the arrangement thus providing a large angle of pivotable movement of the shelf 12 with good access to the luggage stowage space 28. It will be noted that the width of the rear part of the shelf 12 must be such that it can pass through the aperture for the rear door 10.

In both positions of the shelf 12, as shown in full line and chain-dotted line in Figure 1, the cords 17 extend forwardly as they extend upwardly from the rear edge of the shelf 12 to the pulleys 18. In the upper position the angle A between those portions of the cords 17 and the shelf 12 is short of 180°, being about 140° to 150°, and so there is little tendency for the cords 17 to limit the fully open position of the door 10 or for the door 10 in the fully open position to overstress the cords 17 or rip the shelf 12 from its hinge 14.

When the shelf 12 is not needed it can be stowed behind the rear seat backrest by first disconnecting the cords 17 from the pulleys 18 such that the cords are retracted to fit neatly along the upper surface of shelf 12 by the action of the elastic cords 24 described above. The rear seat backrest is then tilted forwardly to enable the sides of the shelf 12 to clear the shelf support elements and permit the shelf to be pivoted downwardly against the rear face of the backrest which can be tilted fully forwardly to a substantially horizontal position or returned to its normal substantially upright position with the shelf stowed against it as shown in dotted line in Figure 1. In the case where the rear seat backrest comprises two independently pivotable portions the pivots 14 and brackets 15 may be spaced apart on one of the backrest portions thus permitting the other backrest portion to be tilted forwardly to an out of use position without disturbing said one of the backrest portions.

In an alternative embodiment, the pivotable panel 25 and associated snap connections may be replaced by a dense opaque band along the marginal lower edge of the backlight and on the underside thereof to provide a means for masking the gap between the rear edge of the shelf 12 and the backlight 11 to prevent visual inspection of the luggage stowage space 28. The band may be secured to the underside surface of the backlight or form an integral part thereof.

It will be appreciated that the arrangments described hereinbefore are particularly suitable for increasing the available volume of luggage stowage space and the access thereto without alteration to an existing backlight area or rear door structure. In other cases and where desired, the height of the backlight 11 may be reduced and the corresponding lower portion of the rear door frame below the backlight widened accordingly, such that, with an increased length of shelf 12, the wider lower portion of the door frame is just above the level of shelf 12 and prevents visual viewing of the luggage space 28. By this means, both the panel 25 and its associated snap-connections or the alternative opaque band on the backlight can be eliminated.

**Claims**

1. A vehicle having a rear door (10) hinged at the top thereof to the vehicle body, a seat (13) in front of the rear door, a shelf (12) between the seat and the door hinged along or adjacent the front of the shelf and a tether (17) extending between the shelf and the door to pivot the shelf upwardly in response to opening of the rear door characterised in that at least one guide (18) is mounted on the door (10) above the shelf (12), and the tether extending from the shelf behind the shelf hinge (14) and around the guide (18) and being anchored to a part of the vehicle not being the door and located below the door hinge.

2. A vehicle as claimed in Claim 1, characterised in that the arrangement is such that the angle between the shelf (12) and that portion of the tether (17) extending from the shelf (12) to the guide (18) is obtuse and substantially less than 180° when the rear door (10) is fully open.

3. A vehicle as claimed in Claim 1 or Claim 2, characterised in that the guide comprises a pulley wheel (18) rotatably mounted on the rear door.

4. A vehicle as claimed in any one of the preceding claims, characterised in that the part of the vehicle to which the tether (17) is anchored is the shelf (12) adjacent the front thereof.

5. A vehicle as claimed in any one of the preceding claims, characterised in that the guide (18) is arranged such that the tether (17) can be detached therefrom to permit the rear door (10) to be opened without pivoting the shelf (12) upwardly.

6. A vehicle as claimed in any one of the preceding claims, characterised in that the tether (17) extends from the shelf (12) at or adjacent the rear of the shelf.

7. A vehicle as claimed in Claim 5 or 6, characterised in that the tether (17) extends through an aperture (16) in the shelf, means (24) being provided to retract the tether (17) through the aperture (16) when the tether is detached from the guide (18) and to permit the tether (17) to be extracted through the aperture (16) when the tether is to be replaced around the guide (18), and a stop (20) being provided to limit the extent to which the tether (17) can be extracted.

8. A vehicle as claimed in Claim 7, characterised in that the retracting means comprises an elastic filament (24) connected between the shelf (12) and the tether (17) below the shelf.

9. A vehicle as claimed in any one of the preceding claims, characterised in that support means are provided on the vehicle structure to either side of the shelf (12) to abut and support the shelf when the shelf is not pivoted upwardly.

10. A vehicle as claimed in Claim 9 and in which the tether (17) can be detached from the guide (18), characterised in that the seat has a forward tiltable backrest (13) to which the shelf is hinged, the shelf (12) being disengagable from the support means when the backrest (13) is tilted forward to permit the shelf to be hinged downwardly to lie against the backrest when the tether is detached from the guide.

11. A vehicle as claimed in any one of the preceding claims, characterised in that the seat has a single backrest and the shelf is hinged to the backrest across the width of the backrest.

12. A vehicle as claimed in any one of claims 1 to 10, characterised in that the backrest has two side-by-side backrest portions, the shelf being hinged to one of the backrest portions across the width thereof.

13. A vehicle as claimed in any one of the preceding claims, characterised in that the shelf constitutes a cover for a luggage compartment (28) of the vehicle.

14. A vehicle as claimed in Claim 13 and in which the rear door has a backlight, characterised in that the shelf extends rearwardly to the rear door at a level such that the interior of the luggage compartment cannot be seen through the backlight.

15. A vehicle as claimed in Claim 13, and in which the rear door has a backlight, characterised in that the shelf extends rearwardly to the rear door above the bottom edge of the backlight, and means being provided on the backlight to render that portion of the backlight between the bottom edge thereof and the shelf opaque.

16. A vehicle as claimed in Claim 13, and which where the rear door has a backlight (11), characterised by the rear edge of the shelf (12) being spaced from the rear door (10) and a transverse member (25) being provided on the door (10) to block the space between the shelf and the door·so that the interior of the luggage compartment (28) cannot be seen through the backlight (11).

**Patentansprüche**

1. Fahrzeug mit einer Hecktür (10), die an ihrem oberen Ende am Fahrzeugkörper angelenkt ist, einem Sitz (13) vor der Hecktür, einer Ablage (12) zwischen dem Sitz und der Tür, die entlang dem oder nahe dem vorderen Ende der Ablage angelenkt ist, und einem Seilzug (17), der sich zwischen der Ablage und der Tür erstreckt, um die Ablage in Abhängigkeit vom Öffnen der Hecktür nach oben zu schwenken, dadurch gekennzeichnet, daß wenigstens eine Führung (18) an der Tür (10) oberhalb der Ablage (12) befestigt ist, und daß sich das Seil so von der Ablage hinter dem Ablagegelenk (14) aus über die Führung (18) erstreckt und an einem Teil des Fahrzeugs, der nicht zur Tür gehört und unterhalb dem Türgelenk liegt, befestigt ist.

2. Fahrzeug nach Anspruch 1, dadurch gekennzeichnet, daß der Winkel zwischen der Ablage (12) und dem Teil des Seilzugs (17), der sich von der Anlage (12) zur Führung (18) erstreckt, stumpf ist und wesentlich weniger als 180° beträgt, wenn die Hecktür (10) voll geöffnet ist.

3. Fahrzeug nach Anspruch 1 oder 2, daß die Führung aus einer Riemenscheibe (18) besteht, die an der Hecktür drehbar gelagert ist.

4. Fahrzeug nach einem der vorhergehenden Ansprüche, dadurch gekennzeichnet, daß der Teil des Fahrzeugs, an dem der Seilzug (17) befestigt ist, die Ablage (12) nahe deren Vorderseite ist.

5. Fahrzeug nach einem der vorhergehenden Ansprüche, dadurch gekennzeichnet, daß die Führung (18) derart befestigt ist, daß der Seilzug (17) von ihr lösbar ist, damit die Hecktür (10) geöffnet werden kann, ohne die Ablage (12) nach oben zu schwenken.

6. Fahrzeug nach einem der vorhergehenden Ansprüche, dadurch gekennzeichnet, daß sich der Seilzug (17) von der Ablage (12) an oder nahe deren Rückseite aus erstreckt.

7. Fahrzeug nach Anspruch 5 oder 6, dadurch gekennzeichnet, daß sich der Seilzug (17) durch eine Öffnung (16) in der Ablage erstreckt, daß eine Rückholeinrichtung (24) vorgesehen ist, um den Seilzug (17) durch die Öffnung (16) zurückzuziehen, wenn der Seilzug von der Führung (18) gelöst wird, und um den Seilzug durch die Öffnung (16) zu ziehen, wenn der Seilzug wieder um die Führung (18) gelegt wird, und daß ein Anschlag (20) vorgesehen ist, um das Ausmaß zu begrenzen, bis zu dem der Seilzug (17) herausgezogen werden kann.

8. Fahrzeug nach Anspruch 7, dadurch gekennzeichnet, daß die Rückholeinrichtung aus einem elastischen Faden (24) besteht, der zwischen der Ablage (12) und dem Seilzug (17) unterhalb der Ablage befestigt ist.

9. Fahrzeug nach einem der vorhergehenden Ansprüche, gekennzeichnet durch eine Trageinrichtung am Fahrzeugrahmen an beiden Seiten der Ablage (12), die an der Ablage anliegt und diese trägt, wenn die Ablage nicht nach oben geschwenkt ist.

10. Fahrzeug nach Anspruch 9, wobei der Seilzug (17) von der Führung (18) gelöst werden kann, dadurch gekennzeichnet, daß der Sitz eine nach vorne schwenkbare Rückenlehne (13) ha, an der die Ablage angelenkt ist, und daß die Ablage (12) von der Trageinrichtung lösbar ist, wenn die Rückenlehne (13) nach vorne geschwenkt wird, um die Ablage nach unten schwenken zu können, so daß sie an der Rückenlehne anliegt, wenn der Seilzug von der Führung gelöst ist.

11. Fahrzeug nach einem der vorhergehenden Ansprüche, dadurch gekennzeichnet, daß der Sitz eine einzige Rückenlehne hat, und daß die Ablage an der Rückenlehne über deren gesamte Breite angelenkt ist.

12. Fahrzeug nach einem der Ansprüche 1 bis 10, dadurch gekennzeichnet, daß die Rückenlehne zwei nebeneinanderliegende Rückenlehnenteile hat, und daß die Ablage an einem der Rückenlehnenteile über dessen Breite angelenkt ist.

13. Fahrzeug nach einem der vorhergehenden Ansprüche, dadurch gekennzeichnet, daß die Ablage eine Abdeckung für einen Gepäckraum (28) des Fahrzeugs bildet.

14. Fahrzeug nach Anspruch 13, wobei die Hecktür ein Heckfenster hat, dadurch gekennzeichnet, daß sich die Ablage zur Hecktür hin in einer Höhe derart nach hinten erstreckt, daß das Innere des Gepäckraumes durch das Rückfenster nicht einsehbar ist.

15. Fahrzeug nach Anspruch 13, wobei die Hecktür ein Heckfenster hat, dadurch gekennzeichnet, daß sich die Ablage zur Hecktür über dem unteren Rand des Heckfensters nach hinten erstreckt, und daß eine Einrichtung am Heckfenster vorgesehen ist, um die Durchsicht durch den Teil des Heckfensters zwischen dessen unterem Rand und der Ablage zu verhindern.

16. Fahrzeug nach Anspruch 13, wobei die Hecktür ein Heckfenster (11) hat, dadurch gekennzeichnet, daß der hintere Rand der Ablage (12) von der Hecktür (10) beabstandet ist, und daß ein Querstück (25) an der Tür (10) vorgesehen ist, um den Raum zwischen der Ablage und der Tür zu verschließen, so daß das Innere des Gepäckraums (28) durch das Heckfenster (11) nicht einsehbar ist.

## Revendications

1. Véhicule ayant une porte arrière (10) articulée à son sommet à la carrosserie du véhicule, un siège (13) devant la porte arrière, une tablette (12) entre le siège et la porte articulée le long de ou à proximité de l'avant de la tablette et une attache (17) s'étendant entre la tablette et la porte pour faire pivoter la tablette vers le haut en réponse à l'ouverture de la porte arrière, caractérisé en ce qu'au moins un guide (18) est monté sur la porte (10) au-dessus de la tablette (12) et l'attache s'étendant de la tablette derrière la charnière (14) de la tablette et autour du guide (18) et étant ancrée à une partie du véhicule qui n'est pas la porte et qui est placée en dessous de la charnière de la porte.

2. Véhicule selon la revendication 1, caractérisé en ce que l'agencement est tel que l'angle entre la tablette (12) et la partie de l'attache (17) s'étendant de la tablette (12) jusqu'au guide (18) soit obtus et sensiblement inférieur à 180° lorsque la porte arrière (10) est totalement ouverte.

3. Véhicule selon la revendication 1 ou la revendication 2, caractérisé en ce que le guide comprend une roue à poulie (18) montée rotative sur la porte arrière.

4. Véhicule selon l'une quelconque des revendications précédentes, caractérisé en ce que la partie du véhicule à laquelle l'attache (17) est ancrée est la tablette (12) à proximité de son avant.

5. Véhicule selon l'une quelconque des revendications précédentes, caractérisé en ce que le guide (18) est agencé de façon que l'attache (17) puisse en être détachée pour permettre l'ouverture de la porte arrière (10) sans faire pivoter la tablette (12) vers le haut.

6. Véhicule selon l'une quelconque des revendications précédentes, caractérisé en ce que l'attache (17) s'étend de la tablette (12) à ou près de l'arrière de la tablette.

7. Véhicule selon la revendication 5 ou 6, caractérisé en ce que l'attache (17) s'étend à travers une ouverture (16) dans la tablette, un moyen (24) étant prévu pour retirer l'attache (17) à travers l'ouverture (16) lorsque l'attache est détachée du guide (18) et pour permettre à l'attache (17) d'être extraite par l'ouverture (16) lorsque l'attache doit être replacée autour du guide (18) et un arrêt (20) étant prévu pour limiter l'étendue d'extraction de l'attache (17).

8. Véhicule selon la revendication 7, caractérisé en ce que le moyen de retrait comprend un filament élastique (24) connecté entre la tablette (12) et l'attache (17) en dessous de la tablette.

9. Véhicule selon l'une quelconque des revendications précédentes, caractérisé en ce que des moyens de support sont prévus sur la structure du véhicule de chaque côté de la tablette (12) pour venir en aboutement et supporter la tablette lorsque celle-ci n'est pas pivotée vers le haut.

10. Véhicule selon la revendication 9 et où l'attache (17) peut être détachée du guide (18), caractérisé en ce que le siège a un dossier (13) pouvant basculer vers l'avant auquel est articulée la tablette, la tablette (12) pouvant se dégager du moyen de support lorsque le dossier (13) est basculé vers l'avant pour permettre à la tablette d'être rabattue vers le bas pour venir reposer contre le dossier lorsque l'attache est détachée du guide.

11. Véhicule selon l'une quelconque des revendications précédentes, caractérisé en ce que le siège a un seul dossier et la tablette est articulée au dossier sur la largeur du dossier.

12. Véhicule selon l'une quelconque des revendications 1 à 10, caractérisé en ce que le dossier a deux parties côte à côte de dossier, la tablette étant articulée sur l'une des parties de dossier sur sa largeur.

13. Véhicule selon l'une quelconque des revendications précédentes, caractérisé en ce que la tablette constitue un couvercle d'un compartiment à bagages (28) du véhicule.

14. Véhicule selon la revendication 13 et où la porte arrière a une lumière arrière, caractérisé en ce que la tablette s'étend vers l'arrière jusqu'à la porte arrière à un niveau tel que l'intérieur du compartiment à bagages ne puisse être vu à travers la lumière arrière.

15. Véhicule selon la revendication 13 et où la porte arrière a une lumière arrière, caractérisé en ce que la tablette s'étend vers l'arrière jusqu'à la porte arrière au-dessus du bord inférieur de la lumière arrière, des moyens étant prévus sur la lumière arrière pour rendre la partie de la lumière arrière entre son bord inférieur et la tablette opaque.

16. Véhicule selon la revendication 13 et où la porte arrière a une lumière arrière (11), caractérisé en ce que le bord arrière de la tablette (12) est espacé de la porte arrière (10) et un organe transversal (25) est prévu sur la porte (10) pour bloquer l'espace entre la tablette et la porte de façon que l'intérieur du compartiment à bagages (28) ne puisse être vu à travers la lumière arrière.

FIG. 1.

FIG.2.

FIG.3.